# EUROPÄISCHE PATENTSCHRIFT

(11) **EP 3 853 967 B1**
(45) Veröffentlichungstag und Bekanntmachung des Hinweises auf die Patenterteilung: **29.07.2026**
(21) Anmeldenummer: 19778461.4
(22) Anmeldetag: 20.09.2019
(51) Int. Cl.: H02J 7/44, H02J 7/54

(54) **BATTERIESYSTEM UND VERFAHREN ZUM BETREIBEN EINES BATTERIESYSTEMS**
BATTERY SYSTEM AND METHOD FOR OPERATING A BATTERY SYSTEM
SYSTÈME DE BATTERIES ET PROCÉDÉ DESTINÉ À FAIRE FONCTIONNER UN SYSTÈME DE BATTERIES

(30) Priorität: 21.09.2018 DE 102018216127
(43) Veröffentlichungstag der Anmeldung: 28.07.2021
(73) Patentinhaber: Robert Bosch GmbH, 70442 Stuttgart (DE)
(72) Erfinder: JOOS, Joachim, 70839 Gerlingen (DE); SCHIEMANN, Werner, 70734 Fellbach (DE)
(86) Internationale Anmeldenummer: PCT/EP2019/075426
(87) Internationale Veröffentlichungsnummer: WO 2020/058518

(56) Entgegenhaltungen:
- WO-A1-99/32323
- WO-A2-2011/127251
- DE-A1- 102015 207 302
- DE-T2- 69 837 816

## Beschreibung

Die vorliegende Erfindung betrifft ein Batteriesystem für ein Kraftfahrzeug sowie ein Verfahren zum Betreiben eines Batteriesystems.

### Stand der Technik

Aus dem allgemeinen Stand der Technik sind verschiedene Batteriesysteme als Strom- und Spannungsquelle für Elektromotoren bekannt. Gemäß einem Ansatz sind zur Erzielung eines gewünschten Strom- und Spannungsmusters mehrere Batteriezellen und/oder Module in Reihe zueinander geschaltet. Bei einer starren Reihenschaltung, welche bei herkömmlichen Systemen noch häufig verbaut wird, gestaltet sich eine Zu- und Abschaltung einzelner Batteriezellen schwierig bis unmöglich. Dies führt insbesondere zu Problemen hinsichtlich einer gewünschten Ausfallsicherheit des Batteriesystems.

Ein wesentliches Problem bei derartigen Systemen entsteht durch den Kommunikationsaufwand für das sogenannte Balancing der einzelnen Batteriezellen. Hier muss ein übergeordnetes Steuergerät mit hoher Datenrate mit den Messwerten der einzelnen Batteriezellen versorgt werden und kann anschließend entscheiden, welcher Batteriezelle Energie entnommen wird und welcher nicht. Die hohe Datenrate entsteht aus der Notwendigkeit für alle Batteriezellen nacheinander diese Entscheidung zu treffen, da dies in dem Batteriesystem nicht parallel verarbeitet werden kann.

Dieser Problematik kann dadurch Rechnung getragen werden, indem jeder Zellebene ein Unter-Steuergerät zugeordnet wird. Die Zellebene wird dadurch autonom entscheidungsfähig. D. h., in diesem Fall ist es ausreichend, bspw. den einzelnen Steuergeräten gleichzeitig nur noch eine Einschaltwahrscheinlichkeit vorzugeben, mit der diese eingeschalten sein müssen. Ist die von den Batteriezellen zur Verfügung gestellte Spannung in Summe zu niedrig, kann das übergeordnete Steuergerät eine Wahrscheinlichkeitsvorgabe erhöhen um weitere Batteriezellen zum Einschalten zu zwingen. Im Gegenzug kann bei verringertem Versorgungsspannungsbedarf, bspw. bei einer geringen Fahrgeschwindigkeit, die Wahrscheinlichkeitsvorgabe herabgesetzt werden, um es schwächeren Batteriezellen zu erlauben, sich auf das Ladeniveau der anderen Batteriezellen zu heben. Eine gattungsgemäße Lehre zum Betreiben eines Batteriesystems geht aus der US 2010/261048 A1 hervor. Weiterer Stand der Technik ist in DE 69837816 T2 offenbart.

Eine Schwierigkeit bei dem vorstehend beschriebenen Ansatz ist jedoch weiterhin die sichere Versorgung der einzelnen Unter-Steuergeräte mit Strom. Wegen eines möglichen Ausfalles einer dem Unter-Steuergerät zugeordneten Batteriezelle dürfen sich die Unter-Steuergeräte möglichst nicht aus den zugeordneten Batteriezellen mit Strom versorgen. Eine weitere Schwierigkeit ist die bidirektionale Kommunikation der einzelnen Unter-Steuergeräte mit dem übergeordneten Steuergerät. Zum einen müssen die einzelnen Zellebenen die Vorgaben des übergeordneten Steuergeräts erhalten, zum anderen benötigt das übergeordnete Steuergerät Informationen aus den einzelnen Batteriezellen.

### Offenbarung der Erfindung

Im Rahmen der vorliegenden Erfindung wird ein Batteriesystem gemäß Anspruch 1 vorgeschlagen, das der voranstehend beschriebenen Problematik zumindest tlw. Rechnung trägt. Ferner wird ein Verfahren gemäß Anspruch 6 zum Betreiben eines solchen Batteriesystems vorgeschlagen. Vorteilhafte Ausführungsformen der Erfindung ergeben sich aus der Beschreibung, den Unteransprüchen und den Figuren. Dabei gelten Merkmale und Details, die im Zusammenhang mit dem Batteriesystem beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Batteriesystem für ein Kraftfahrzeug zur Verfügung gestellt. Das Batteriesystem weist eine Ansteuereinheit, ein Haupt-Steuergerät, mehrere Unter-Steuergeräte sowie mehrere Batteriezellen auf, wobei die Ansteuereinheit zur Datenerfassung von den Unter-Steuergeräten mit den Unter-Steuergeräten in Signalverbindung steht und jedes Unter-Steuergerät zur Datenerfassung von der zugehörigen Batteriezelle jeweils mit einer Batteriezelle in Signalverbindung steht, und wobei das Haupt-Steuergerät zur Energieversorgung der Unter-Steuergeräte mit den Unter-Steuergeräten elektrisch verbunden ist.

Im Rahmen der vorliegenden Erfindung wurde erkannt, dass die Unter-Steuergeräte durch ein zur Ansteuereinheit separat angeordnetes Haupt-Steuergerät zuverlässig mit Strom und Spannung versorgt werden können und über das Haupt-Steuergerät auf bidirektionale Weise gleichzeitig ein Informationsaustausche zwischen den Unter-Steuergeräten, dem Haupt-Steuergerät sowie der Ansteuereinheit realisiert werden kann.

Erfindungsgemäß wird ein Batteriesystem mit untergeordneten Unter-Steuergeräten und einem übergeordneten Haupt-Steuergerät zur Verfügung gestellt. Zur Energieversorgung der Unter-Steuergeräte ist das Haupt-Steuergerät mit den Unter-Steuergeräten durch ein getaktetes Spannungssignal elektrisch verbunden. D.h., das übergeordnete Haupt-Steuergerät generiert einen Takt mit einem vordefinierbaren Spannungssignal als Pulsfolge, wodurch die einzelnen Unter-Steuergeräte mit Energie bzw. Strom und Spannung versorgt werden. Bei umfangreichen Versuchen im Rahmen der vorliegenden Erfindung hat sich herausgestellt, dass das Haupt-Steuergerät, zur Energieversorgung der Unter-Steuergeräte, mit einem getakteten Spannungssignal mit einer Frequenz in einem Bereich zwischen 1kHz und 1mHz, insbesondere in einem Bereich zwischen 50 kHz und 200 kHz, mit den Unter-Steuergeräten bzw. mit einem jeweiligen Unter-Steuergerät in Signalverbindung steht.

Die Unter-Steuergeräte stellen erfindungsgemäß jeweils zusätzlich eine Stromsenke dar. D. h. die Unter-Steuergeräte entnehmen dem Pulssignal jeweils nicht nur die Eigenversorgung, sondern einen zusätzlichen Strom. Der Strom kann analog mit einer Höhe in einem Bereich zwischen 1 mA und10 mA entnommen werden. Damit kann dem übergeordneten Haupt-Steuergerät zum Beispiel eine Information über den Ladezustand (SOC) der jeweiligen Batteriezelle mitgeteilt werden. Da dies bei allen Unter-Steuergeräten gleichzeitig durchgeführt werden kann, ist es möglich, durch das übergeordnete Haupt-Steuergerät eine Information über die insgesamt zu Verfügung stehende Ladung bzw. den entsprechenden Strom ohne wesentliche Verzögerungen und insbesondere während eines regulären Betriebs des Batteriesystems zu erlangen. Über die Höhe des gesamten Stromes kann anschließend die Verfügbarkeit des Gesamtsystems im laufenden Betrieb ermittelt werden.

Erfindungsgemäß steht jedes Unter-Steuergerät jeweils mit einer Batteriezelle in direkter Signalverbindung, insbesondere in elektrischer Verbindung. Unter einer Signalverbindung kann vorliegend insbesondere eine Datenverbindung zum bidirektionalen Datenaustausch verstanden werden. Über die Signalverbindung kann, muss aber kein Strom geführt werden können. Unter der elektrischen Verbindung ist vorliegend eine kabel- oder drahtgebundene, mechanische Verbindung zwischen wenigstens zwei Funktionsbauteilen zu verstehen. Durch die elektrische Verbindung bzw. eine entsprechende Verbindungsleitung oder eine Verbindungsleitungsanordnung können Strom und Spannung, gleichzeitig aber auch Daten übertragen werden.

Unter dem Batteriesystem ist vorzugsweise ein Batteriesystem zur Leistungsversorgung einer elektrischen Antriebseinheit, insbesondere eines Elektromotors, zum Antreiben des Kraftfahrzeugs zu verstehen, wobei das Kraftfahrzeug entsprechend als reines Elektrofahrzeug oder in Form eines Hybrid-Elektrofahrzeugs ausgestaltet sein kann. Unter einem Kraftfahrzeug kann vorliegend ein Straßenfahrzeug wie ein PKW und ein LKW, ein Schienenfahrzeug, ein Wasserfahrzeug, ein Luftfahrzeug und/oder ein Roboter verstanden werden. Darüber hinaus kann das Batteriesystem zur Verwendung in stationären Systemen wie sicherheitsrelevanten Batteriespeichersystemen Verwendung finden.

Die Ansteuereinheit kann in Form einer Ansteuereinheit für eine Antriebsvorrichtung des Kraftfahrzeugs ausgestaltet sein. So kann die Ansteuereinheit als Ansteuereinheit bzw. entsprechendes Steuergerät eines Elektromotors des Kraftfahrzeugs konfiguriert und ausgestaltet sein. Das Haupt-Steuergerät ist in diesem Fall funktionstechnisch nicht direkt dem Elektromotor, sondern den Unter-Steuereinheiten und dadurch den Batteriezellen zugeordnet.

Unter der Datenerfassung kann eine zeitgleiche oder zeitfolgerichtige Messung und Zählung, gegebenenfalls einschließlich eines Zeitstempels für messbare oder zählbare Daten und Gruppen von zusammenhängenden Daten, verstanden werden. Das Haupt-Steuergerät kann mit jedem Unter-Steuergerät direkt oder indirekt elektrisch verbunden sein. D. h., zwischen dem Haupt-Steuergerät und den Untersteuergeräten kann jeweils noch wenigstens ein weiteres Funktionsbauteil angeordnet sein.

Gemäß einer weiteren Ausführungsform der vorliegenden Erfindung ist es möglich, dass bei einem Batteriesystem das Haupt-Steuergerät zur Energieversorgung der Unter-Steuergeräte mit den Unter-Steuergeräten durch einen ersten Signalpfad und einen zweiten Signalpfad elektrisch verbunden ist, wobei der erste Signalpfad und der zweite Signalpfad jeweils zur Energieversorgung der Unter-Steuergeräte konfiguriert und angeordnet sind. Vorliegend wurde herausgefunden, dass eine redundante Auslegung der Strom- bzw. Energieversorgung noch mehr Vorteile mit sich bringt. Dadurch, dass der erste Signalpfad und der zweite Signalpfad jeweils zur Energieversorgung der Unter-Steuergeräte konfiguriert und angeordnet sind, können Versorgung und Kommunikation zwischen dem Haupt-Steuergerät und den Unter-Steuergeräten erweitert gegen Ausfälle geschützt werden. Darüber hinaus kann eine Plausibilisierung im laufenden Betrieb stattfinden, wenn eine Information des einen Kanals bzw. bspw. des ersten Signalpfads mit einer Information des anderen Kanals bzw. des zweiten Signalpfads überprüft wird. Auch die Energieversorgung kann auf Redundanz geprüft werden, wenn bspw. die zum Betrieb notwendige Grundstromversorgung über den ersten Signalpfad sichergestellt wird, weitere Pulse - und damit eine analoge Strominformation - aber über den benachbarten zweiten Signalpfad.

Außerdem ist es möglich, dass bei einem Batteriesystem gemäß der vorliegenden Erfindung für eine Potentialtrennung zwischen dem Haupt-Steuergerät und den Unter-Steuergeräten jeweils ein Kondensator oder eine Spulenanordnung zwischen dem Haupt-Steuergerät und den Unter-Steuergeräten angeordnet ist. Die spannungsbezogene Abtrennung der einzelnen Zellebenen parallel kapazitiv über Kondensatoren weist Vorteile bezüglich einer notwendigen Kapazität der eingesetzten Kondensatoren auf. Gleichwohl kann die Abtrennung auch seriell kapazitiv vorgenommen werden. Dies resultiert in Vorteilen bezüglich der Anzahl und Spannungsfestigkeit der Kondensatoren. Alternativ ist die Abtrennung auch durch induktive Komponenten wie die vorstehend erwähnte Spulenanordnung möglich. Auch hier kann die Abtrennung seriell oder parallel erfolgen. Darüber hinaus sind noch weitere Kopplungsmöglichkeiten wie bspw. über Spartransformatoren möglich.

Unter einer Anordnung eines Funktionsbauteils bzw. einer Funktionsbaugruppe in Form des Kondensators oder der Spulenanordnung zwischen dem Haupt-Steuergerät und den Unter-Steuergeräten ist eine Anordnung eines ersten Funktionsbauteils zwischen dem Haupt-Steuergerät und einem ersten Unter-Steuergerät, eines zweiten Funktionsbauteils zwischen dem Haupt-Steuergerät und einem zweiten Unter-Steuergerät, und eines beliebig weiteren Funktionsbauteils zwischen dem Haupt-Steuergerät und einem beliebig weiteren Unter-Steuergerät zu verstehen.

Wie vorstehend erwähnt, können die Kondensatoren oder die Spulenanordnungen bei einem erfindungsgemäßen Batteriesystem in Reihe oder parallel zueinander geschaltet sein. Abhängig von der Architektur und den Ansprüchen an das vorliegende Batteriesystem kann dieses dadurch besonders anpassungsfähig bereitgestellt werden. Entsprechend ist es bei einem erfindungsgemäßen Batteriesystem möglich, dass die Kondensatoren oder die Spulenanordnungen parallel zueinander geschaltet sind.

Gemäß einem weiteren Aspekt der vorliegenden Erfindung wird ein Verfahren zum Betreiben eines wie vorstehend im Detail erläuterten Batteriesystems zur Verfügung gestellt. Im Rahmen des Verfahrens werden die Unter-Steuergeräte durch eine elektrische Verbindung zwischen den Unter-Steuergeräten und dem Haupt-Steuergerät mit Energie versorgt. Damit bringt das erfindungsgemäße Verfahren die gleichen Vorteile mit sich, wie sie ausführlich mit Bezug auf das erfindungsgemäße Batteriesystem beschrieben worden sind.

Das Verfahren kann automatisch durch ein Computerprogramm durchgeführt sein oder werden. D.h., im Rahmen der vorliegenden Erfindung kann ein Computerprogramm zum Einstellen bzw. Steuern und/oder Regeln des Batteriesystems bereitgestellt sein, das auf einem Medium gespeichert und/oder installiert zum Durchführen eines erfindungsgemäßen Verfahrens konfiguriert und ausgestaltet ist. Das Computerprogramm kann als computerlesbarer Anweisungscode in jeder geeigneten Programmiersprache wie bspw. in JAVA, C++ oder C# implementiert sein. Das Computerprogramm kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie ein Steuergerät derart programmieren, dass die gewünschten Funktionen ausgeführt werden. Ferner kann das Computerprogramm in einem Netzwerk wie bspw. dem Internet bereitgestellt werden bzw. sein, von dem es bei Bedarf von einem Nutzer heruntergeladen werden kann. Das Computerprogramm kann sowohl mittels einer Software, als auch mittels einer oder mehrerer spezieller elektronischer Schaltungen, d.h. in Hardware in Form eines Computerprogrammprodukts, oder in beliebig hybrider Form, d.h. mittels Software-Komponenten und Hardware-Komponenten, realisiert werden bzw. sein.

Weiterhin ist es möglich, dass die Unter-Steuergeräte durch die elektrische Verbindung zwischen den Unter-Steuergeräten und dem Haupt-Steuergerät über ein getaktetes Spannungssignal mit Energie versorgt werden. Auf eine Energiequelle in Form der Batteriezellen kann dadurch verzichtet werden.

Bei einer weiteren Ausgestaltungsvariante der vorliegenden Erfindung kann durch das Haupt-Steuergerät ein einstellbar gepulstes Spannungssignal als Code zum Ermitteln eines Betriebs- und/oder Alterungszustandes der Unter-Steuergeräte an die Unter-Steuergeräte übermittelt werden. Die Anordnung der Pulse ermöglicht es, einzelne Codes digital an die Unter-Steuergeräte bzw. jeweils an eines der Unter-Steuergeräte zu übermitteln. Über den Code bzw. die Codes können bspw. defekte Steuergeräte aufgefordert werden, dies dem Haupt-Steuergerät mitzuteilen. Nachdem über Codes vom übergeordneten Haupt-Steuergerät auch einzelne Unter-Steuergeräte direkt adressiert werden können, können diese auch selektiv einen Strom einprägen und sich so dem übergeordneten Haupt-Steuergerät mitteilen.

Der vorstehend beschriebene Prozess kann relativ zeitaufwändig sein. Bei Versuchen, die im Rahmen der vorliegenden Erfindung durchgeführt wurden, hat es sich als Vorteilhaft herausgestellt, dass die Codes vom Haupt-Steuergerät einzeln direkt an die jeweiligen Unter-Steuergeräte übermittelt werden, wobei dies während eines Startvorgangs bzw. eines Hochfahrens des Batteriesystems durchgeführt wird. Nachteilige Wechselwirkungen konnten hierbei nicht festgestellt werden.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen:
- Fig. 1: ein Blockdiagramm zum Erläutern eines Batteriesystems gemäß einer ersten Ausführungsform der vorliegenden Erfindung,
- Fig. 2: ein Blockdiagramm zum Erläutern eines Batteriesystems gemäß einer zweiten Ausführungsform der vorliegenden Erfindung,
- Fig. 3: ein Blockdiagramm zum Erläutern eines Batteriesystems gemäß einer dritten Ausführungsform der vorliegenden Erfindung,
- Fig. 4: ein Blockdiagramm zum Erläutern eines Batteriesystems gemäß einer vierten Ausführungsform der vorliegenden Erfindung,
- Fig. 5: ein Blockdiagramm zum Erläutern eines Batteriesystems gemäß einer fünften Ausführungsform der vorliegenden Erfindung.

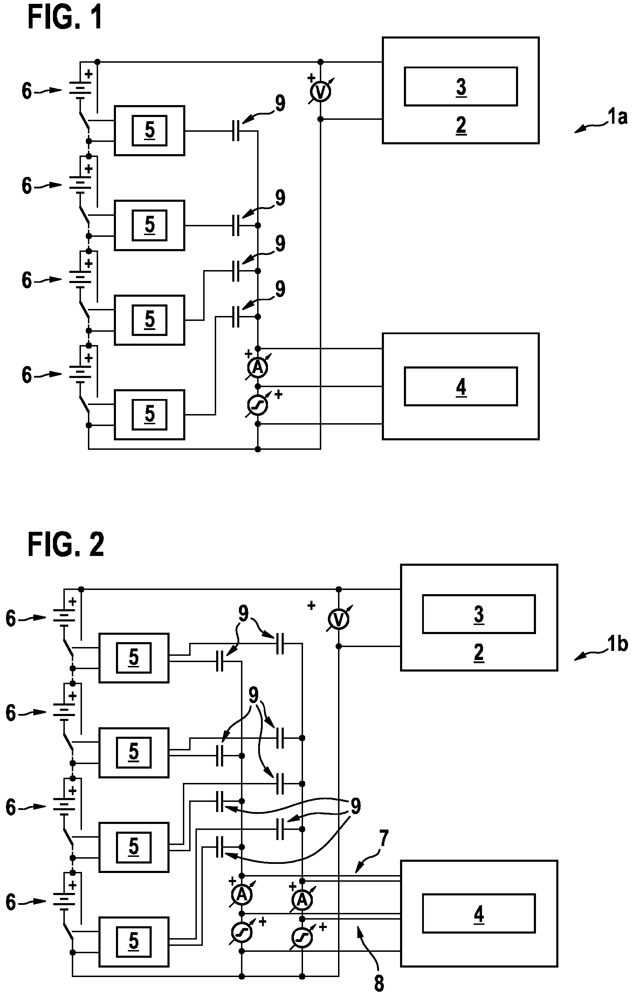

Elemente mit gleicher Funktion und Wirkungsweise sind in den Figuren 1 bis 5 jeweils mit demselben Bezugszeichen versehen.

Fig. 1 zeigt ein Batteriesystem 1a für ein Kraftfahrzeug gemäß einer ersten Ausführungsform. Das Batteriesystem 1a weist eine Ansteuereinheit 3 in Form eines Motorsteuergeräts für einen Elektromotor 2 des Kraftfahrzeugs, ein Haupt-Steuergerät 4 und mehrere Unter-Steuergeräte 5 auf. Außerdem weist das Batteriesystem mehrere den Unter-Steuergeräten 5 zugeordnete Batteriezellen 6 auf. Die Ansteuereinheit 3 steht zur Datenerfassung von den Unter-Steuergeräten 5 mit den Unter-Steuergeräten 5 in Signalverbindung. Ferner steht jedes Unter-Steuergerät 5 zur Datenerfassung von der zugehörigen Batteriezelle 6 jeweils mit einer Batteriezelle 6 in Signalverbindung. Darüber hinaus ist das Haupt-Steuergerät 4 zur Energieversorgung der Unter-Steuergeräte 5 mit den Unter-Steuergeräten 5 elektrisch verbunden. Das Haupt-Steuergerät 4 ist, zur Energieversorgung der Unter-Steuergeräte 5 mit einem getakteten Spannungssignal von ca. 100 kHz, mit den Unter-Steuergeräten 5 elektrisch verbunden. Zur Potentialtrennung zwischen dem Haupt-Steuergerät 4 und den Unter-Steuergeräten 5 ist jeweils ein Kondensator 9 zwischen dem Haupt-Steuergerät 5 und den Unter-Steuergeräten 5 angeordnet. Die Kondensatoren 9 sind parallel zueinander geschaltet.

In Fig. 2 ist ein Batteriesystem 1b gemäß einer zweiten Ausführungsform dargestellt. In dem in Fig. 2 dargestellten Batteriesystem 1b ist das Haupt-Steuergerät 4 zur Energieversorgung der Unter-Steuergeräte 5 mit den Unter-Steuergeräten 5 durch einen ersten Signalpfad 7 und einen zweiten Signalpfad 8 elektrisch verbunden, wobei der erste Signalpfad 7 und der zweite Signalpfad 8 jeweils zur Energieversorgung der Unter-Steuergeräte 5 konfiguriert und angeordnet sind. Die Kondensatoren 9 sind parallel zueinander geschaltet.

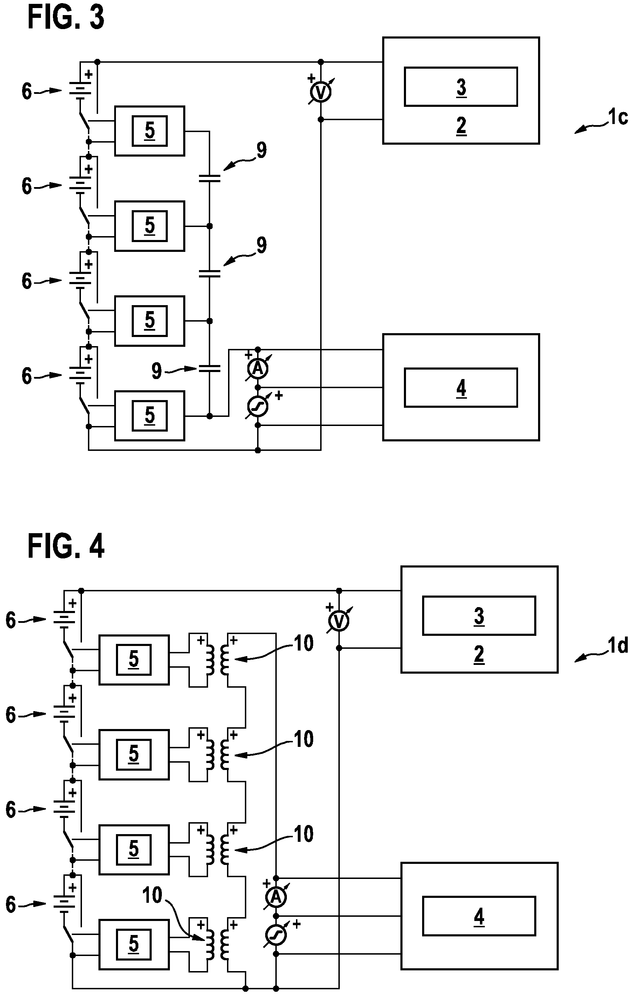

In Fig. 3 ist ein Batteriesystem 1c gemäß einer dritten Ausführungsform dargestellt. In dem in Fig. 3 dargestellten Batteriesystem 1c sind die Kondensatoren 9 in Reihe geschaltet.

Fig. 4 zeigt ein Batteriesystem 1d gemäß einer vierten Ausführungsform, in welchem an Stelle der Kondensatoren 9 induktive Spulenanordnungen 10 bereitgestellt sind. Gemäß der in Fig. 4 dargestellten Ausführungsform sind die Spulenanordnungen 10 parallel zueinander geschaltet.

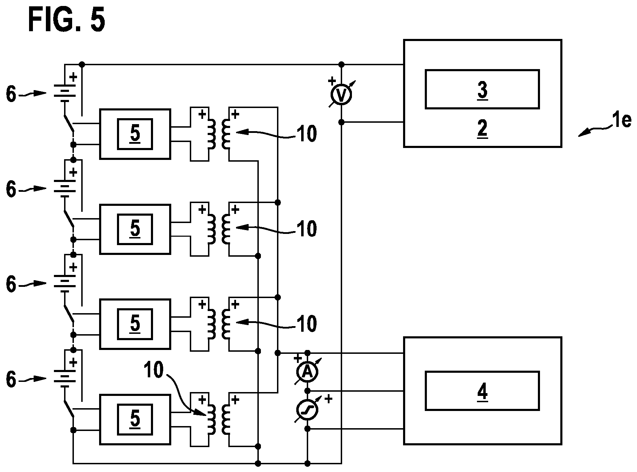

In Fig. 5 ist ein Batteriesystem 1e gemäß einer fünften Ausführungsform dargestellt. In dem in Fig. 5 dargestellten Batteriesystem 1e sind die Spulenanordnungen 10 in Reihe geschaltet.

Mit Bezug auf Fig. 1 wird anschließend ein Verfahren zum Betreiben des dargestellten Batteriesystems 1a erläutert, bei welchem die Unter-Steuergeräte 5 durch die elektrische Verbindung zwischen den Unter-Steuergeräten 5 und dem Haupt-Steuergerät 4 mit Energie bzw. Strom und Spannung versorgt werden. Genauer gesagt werden die Unter-Steuergeräte 5 durch die elektrische Verbindung zwischen den Unter-Steuergeräten 5 und dem Haupt-Steuergerät 4 über ein getaktetes Spannungssignal mit Energie versorgt. Hierbei wird durch das Haupt-Steuergerät 4 ein einstellbar gepulstes Spannungssignal als Code zum Ermitteln eines Betriebszustandes der Unter-Steuergeräte 5 an die Unter-Steuergeräte 5 übermittelt, wobei die Codes vom Haupt-Steuergerät 4 einzeln direkt an die jeweiligen Unter-Steuergeräte 5 übermittelt werden. Da dieser Vorgang relativ viel Zeit in Anspruch nehmen kann, wird dies während eines Startvorgangs des Batteriesystems 1a bzw. während eines Hochfahrens des Batteriesystems 1a durchgeführt.

Die Erfindung lässt neben den dargestellten Ausführungsformen weitere Gestaltungsgrundsätze zu. D. h., die Erfindung soll nicht auf die zu den Figuren beschriebenen Ausführungsbeispiele beschränkt betrachtet werden.

## Patentansprüche

1. Batteriesystem (1a; 1b; 1c; 1d; 1e) für ein Kraftfahrzeug, aufweisend eine Ansteuereinheit (3), ein Haupt-Steuergerät (4), mehrere Unter-Steuergeräte (5) sowie mehrere Batteriezellen (6), wobei die Ansteuereinheit (3) zur Datenerfassung von den Unter-Steuergeräten (5) mit den Unter-Steuergeräten (5) in Signalverbindung steht und jedes Unter-Steuergerät (5) zur Datenerfassung von der zugehörigen Batteriezelle (6) jeweils mit einer Batteriezelle (6) in Signalverbindung steht, und wobei das Haupt-Steuergerät (4) zur Energieversorgung der Unter-Steuergeräte (5) mit den Unter-Steuergeräten (5) elektrisch verbunden ist, **dadurch gekennzeichnet, dass** das Haupt-Steuergerät (4) zur Energieversorgung der Unter-Steuergeräte (5) mit einem getakteten Spannungssignal mit einer Frequenz in einem Bereich zwischen 1kHz und 1MHz konfiguriert ist.

2. Batteriesystem (1a; 1b; 1c; 1d; 1e) nach Anspruch 1,
**dadurch gekennzeichnet,**
**dass** das Haupt-Steuergerät (4) zur Energieversorgung der Unter-Steuergeräte (5) mit den Unter-Steuergeräten (5) durch einen ersten Signalpfad (7) und einen zweiten Signalpfad (8) elektrisch verbunden ist, wobei der erste Signalpfad (7) und der zweite Signalpfad (8) jeweils zur Energieversorgung der Unter-Steuergeräte (5) konfiguriert und angeordnet sind.

3. Batteriesystem (1a; 1b; 1c; 1d; 1e) nach einem der voranstehenden Ansprüche,
**dadurch gekennzeichnet,**
**dass** zur Potentialtrennung zwischen dem Haupt-Steuergerät (4) und den Unter-Steuergeräten (5) jeweils ein Kondensator (9) oder eine Spulenanordnung (10) zwischen dem Haupt-Steuergerät (5) und den Unter-Steuergeräten (5) angeordnet ist.

4. Batteriesystem (1c; 1d) nach Anspruch 3,
**dadurch gekennzeichnet,**
**dass** die Kondensatoren (9) oder die Spulenanordnungen (10) in Reihe geschaltet sind.

5. Batteriesystem (1b; 1e) nach Anspruch 3,
**dadurch gekennzeichnet,**
**dass** die Kondensatoren (9) oder die Spulenanordnungen (10) parallel zueinander geschaltet sind.

6. Verfahren zum Betreiben eines Batteriesystems (1a; 1b; 1c; 1d; 1e) nach einem der voranstehenden Ansprüche, wobei die Unter-Steuergeräte (5) durch eine elektrische Verbindung zwischen den Unter-Steuergeräten (5) und dem Haupt-Steuergerät (4)über ein getaktetes Spannungssignal mit einer Frequenz in einem Bereich zwischen 1kHz und 1MHz mit Energie versorgt werden.

7. Verfahren nach Anspruch 6,
**dadurch gekennzeichnet,**
**dass** durch das Haupt-Steuergerät (4) ein einstellbar gepulstes Spannungssignal als Code zum Ermitteln eines Betriebs- und/oder Alterungszustandes der Unter-Steuergeräte (5) an die Unter-Steuergeräte (5) übermittelt wird.

8. Verfahren nach Anspruch 7,
**dadurch gekennzeichnet,**
**dass** die Codes vom Haupt-Steuergerät (4) einzeln direkt an die jeweiligen Unter-Steuergeräte (5) übermittelt werden, wobei dies während eines Startvorgangs des Batteriesystems (1a; 1b; 1c; 1d; 1e) durchgeführt wird.

## Claims

1. Battery system (1a; 1b; 1c; 1d; 1e) for a motor vehicle, comprising a control unit (3), a main controller (4), multiple subordinate controllers (5) and multiple battery cells (6), the control unit (3) being in signal communication with the subordinate controllers (5) in order to acquire data from the subordinate controllers (5), and each subordinate controller (5) being in signal communication with a respective battery cell (6) in order to acquire data from the associated battery cell (6), and the main controller (4) being electrically connected to the subordinate controllers (5) in order to supply power to the subordinate controllers (5), **characterized in that** the main controller (4), in order to supply power to the subordinate controllers (5), is configured with a clocked voltage signal having a frequency in a range between 1 kHz and 1 MHz.

2. Battery system (1a; 1b; 1c; 1d; 1e) according to Claim 1,
**characterized**
**in that** the main controller (4), in order to supply power to the subordinate controllers (5), is electrically connected to the subordinate controllers (5) by a first signal path (7) and a second signal path (8), the first signal path (7) and the second signal path (8) each being configured and arranged to supply power to the subordinate controllers (5).

3. Battery system (1a; 1b; 1c; 1d; 1e) according to either of the preceding claims,
**characterized**
**in that** a capacitor (9) or coil arrangement (10) is arranged between the main controller (5) and each of the subordinate controllers (5) in order to provide potential isolation between the main controller (4) and the subordinate controllers (5).

4. Battery system (1c; 1d) according to Claim 3,
**characterized**
**in that** the capacitors (9) or coil arrangements (10) are connected in series.

5. Battery system (1b; 1e) according to Claim 3,
**characterized**
**in that** the capacitors (9) or coil arrangements (10) are connected in parallel with one another.

6. Method for operating a battery system (1a; 1b; 1c; 1d; 1e) according to one of the preceding claims, wherein the subordinate controllers (5) are supplied with power by an electrical connection between the subordinate controllers (5) and the main controller (4) by means of a clocked voltage signal having a frequency in a range between 1 kHz and 1 MHz.

7. Method according to Claim 6,
**characterized**
**in that** the main controller (4) transmits an adjustably pulsed voltage signal to the subordinate controllers (5) as code in order to determine an operating state and/or a state of health of the subordinate controllers (5).

8. Method according to Claim 7,
**characterized**
**in that** the codes from the main controller (4) are transmitted individually directly to the respective subordinate controllers (5), this being carried out during a starting process of the battery system (1a; 1b; 1c; 1d; 1e).

## Revendications

1. Système de batteries (1a ; 1b ; 1c ; 1d ; 1e) pour un véhicule automobile, comportant une unité de pilotage (3), un appareil principal de commande (4), plusieurs appareils de commande subordonnés (5) ainsi que plusieurs éléments de batteries (6), l'unité de pilotage (3) se trouvant en connexion par signaux avec les appareils subordonnés de commande (5) pour la détection de données des appareils subordonnés de commande (5) et chaque appareil de commande subordonné (5) se trouvant respectivement en connexion de signaux avec un élément de batterie (6) pour la détection de données de l'élément de batterie (6) associé, et l'appareil de commande principal (4) étant connecté électriquement aux appareils de commande subordonnés (5) pour l'alimentation en énergie des appareils de commande subordonnés (5), **caractérisé en ce que** l'appareil de commande principal (4) est configuré pour l'alimentation en énergie des appareils de commande subordonnés (5) avec un signal de tension cadencé ayant une fréquence se situant dans une plage comprise entre 1 kHz et 1 MHz.

2. Système de batteries (1a ; 1b ; 1c ; 1d ; 1e) selon la revendication 1,
**caractérisé en ce que**
l'appareil de commande principal (4) est connecté électriquement aux appareils de commande subordonnés (5) par un premier trajet de signal (7) et un deuxième trajet de signal (8) pour l'alimentation en énergie des appareils de commande subordonnés (5), le premier trajet de signal (7) et le deuxième trajet de signal (8) étant respectivement configurés et agencés pour l'alimentation en énergie des appareils de commande subordonnés (5).

3. Système de batteries (1a ; 1b ; 1c ; 1d ; 1e) selon l'une des revendications précédentes,
**caractérisé en ce que**
pour l'isolation de potentiel entre l'appareil de commande principal (4) et les appareils de commande subordonnés (5), un condensateur (9) ou un agencement de bobines (10) est disposé entre l'appareil de commande principal (5) et les appareils de commande subordonnés (5).

4. Système de batteries (1c ; 1d) selon la revendication 3,
**caractérisé en ce que**
les condensateurs (9) ou les agencements de bobines (10) sont connectés en série.

5. Système de batteries (1b ; 1e) selon la revendication 3,
**caractérisé en ce que**
les condensateurs (9) ou les agencements de bobines (10) sont connectés en parallèle les uns avec les autres.

6. Procédé destiné à faire fonctionner un système de batteries (1a ; 1b ; 1c ; 1d ; 1e) selon l'une des revendications précédentes, dans lequel les appareils de commande subordonnés (5) sont alimentés en énergie par une connexion électrique entre les appareils de commande subordonnés (5) et l'appareil de commande principal (4) par l'intermédiaire d'un signal de tension cadencé ayant une fréquence se situant dans une plage comprise entre 1 kHz et 1 MHz.

7. Procédé selon la revendication 6,
**caractérisé en ce que**
**en ce qu'**un signal de tension pulsé réglable est transmis par l'appareil de commande principal (4) aux appareils de commande subordonnés (5) sous forme de code destiné à déterminer un état de fonctionnement et/ou de vieillissement des appareils de commande subordonnés (5).

8. Procédé selon la revendication 7,
**caractérisé en ce que**
les codes sont transmis individuellement directement de l'appareil de commande principal (4) aux appareils de commande subordonnés (5) respectifs, cela étant effectué pendant un processus de démarrage du système de batteries (1a ; 1b ; 1c; 1d ; 1e).
